# EUROPEAN PATENT APPLICATION

(11) **EP 4 818 894 A1**
(43) Date of publication of application: **07.10.2026**
(21) Application number: 24896466.0
(22) Date of filing: 25.11.2024
(51) Int. Cl.: G06F 9/451

(54) **CHARACTER LOADING METHOD, CHARACTER FILE GENERATION METHOD, AND RELATED DEVICE**

(30) Priority: 28.11.2023 CN 202311607672
(71) Applicant: Beijing Zitiao Network Technology Co., Ltd., Beijing 100190 (CN)
(72) Inventor: WANG, Guannan, CULVER CITY, California 90230 (US); GU, Jianming, Beijing 100028 (CN)
(74) Representative: Marks & Clerk LLP
(86) International application number: PCT/CN2024/134192
(87) International publication number: WO 2025/113377

(57) **Abstract**

The present disclosure provides a text loading method, including: acquiring a binary text file to be decoded in response to an event of loading a target text, the binary text file including a feature code of a key-value and a multilingual text corresponding to the key-value, where the key-value is used to express a semantics of the multilingual text, and a first separator exists between any adjacent feature codes of the key-value and between any adjacent multilingual texts; determining, according to the target text and the binary file, a feature code of a key-value corresponding to the target text and a corresponding multilingual text; and loading the target text according to the feature code of the key-value corresponding to the target text and the corresponding multilingual text. Based on the above text loading method, the present disclosure further provides a text file generation method, a text loading apparatus, a text file generation apparatus, an electronic device, a storage medium, and a program product.

## Description

The present application claims priority to Chinese Patent Application No. 202311607672.4, filed on November 28, 2023, and entitled "TEXT LOADING METHOD, TEXT FILE GENERATION METHOD, AND RELATED DEVICE", which is incorporated herein by reference in its entirety.

### TECHNICAL FIELD

The present application relates to the technical field of computer copywriting configuration, and in particular, to a text loading method, a text file generation method, and a related device.

### BACKGROUND

Multilingual resources refer to multilingual support for a single project. With the deepening of economic globalization, a project or program needs to be used in language environments around the world, and thus the project needs to be configured with corresponding language resources for the language system of the release place, such as Simplified Chinese, Traditional Chinese, English, French, Japanese, and the like. In addition, after multiple language resources are configured, flexible switching between different languages is also required, thereby reducing the development cost of adapting to different regions.

At present, it is generally possible to provide calling by storing different language texts in a cloud server or locally, and when the language text needs to be switched, the corresponding language text may be directly called. However, because the current multilingual resource copywriting is stored and called directly in formats such as JavaScript Object Notation (JSON) or Extensible Markup Language (XML), the volume occupancy of the resource file during storage and calling is too large due to the insufficient compactness of the above formats. In addition, because the above formats are in plain text, the resource file cannot be encrypted.

### SUMMARY

In view of this, embodiments of the present disclosure provide a text loading method, a text file generation method, and a related device, which may effectively reduce the volume of a resource file for storage, and may implement encryption of the resource file.

According to some embodiments of the present disclosure, the above text loading method may include: acquiring a binary text file to be decoded in response to an event of loading a target text, the binary text file including a feature code of a key-value and a multilingual text corresponding to the key-value, where the key-value is used to express a semantics of the multilingual text, and a first separator exists between any adjacent feature codes of the key-value and between any adjacent multilingual texts; determining, according to the target text and the binary file, a feature code of a key-value corresponding to the target text and a corresponding multilingual text; and loading the target text according to the feature code of the key-value corresponding to the target text and the corresponding multilingual text.

Based on the above text loading method, an embodiment of the present disclosure provides a text loading apparatus, including:
an acquiring module, configured to acquire a binary text file to be decoded in response to an event of loading a target text, the binary text file including a feature code of a key-value and a multilingual text corresponding to the key-value, where the key-value is used to express a semantics of the multilingual text, and a first separator exists between any adjacent feature codes of the key-value and between any adjacent multilingual texts;
a first determination module, configured to determine, according to the target text and the binary file, a feature code of a key-value corresponding to the target text and a corresponding multilingual text; and
a loading module, configured to load the target text according to the feature code of the key-value corresponding to the target text and the corresponding multilingual text.

In addition, according to some embodiments of the present disclosure, the above text file generation method may include: determining a key-value and a multilingual text corresponding to different languages from an acquired multilingual copywriting, the key-value being used to express a semantics of the multilingual text; extracting a feature code of the key-value, and separating each of the feature codes by a first separator; separating each of the multilingual texts by the first separator; and generating a binary text file according to the feature code, the multilingual text, and the first separator.

Based on the above text file generation method, an embodiment of the present disclosure provides a text file generation apparatus, including:
a second determination module, configured to determine a key-value and a multilingual text corresponding to different languages from an acquired multilingual copywriting, the key-value being used to express a semantics of the multilingual text;
an extraction module, configured to extract a feature code of the key-value, and separate each of the feature codes by a first separator;
a separation module, configured to separate each of the multilingual texts by the first separator; and
a generation module, configured to generate a binary text file according to the feature code, the multilingual text, and the first separator.

In addition, an embodiment of the present disclosure further provides an electronic device, including a memory, a processor, and a computer program stored on the memory and executable on the processor, where the processor, when executing the program, implements the above method.

An embodiment of the present disclosure further provides a non-transitory computer-readable storage medium, storing computer instructions, where the computer instructions are used to cause a computer to execute the above method.

An embodiment of the present disclosure further provides a computer program product, including computer program instructions, where the computer program instructions, when running on a computer, cause the computer to execute the above method.

According to the above text loading method, text file generation method, and related device, when texts are loaded, a new text file generation method is constructed instead of calling or storing a multilingual resource file in a traditional JSON or XML format when a binary text file is generated, and feature codes and multilingual texts are separated by a first separator and rearranged, so that the size of the called multilingual resource file may be effectively reduced in the loading process, and the resources consumed for data processing may be reduced. It may be seen that through the above reconstruction of the format of the multilingual resource file, the processed multilingual resource texts may be effectively arranged compactly, the storage space occupied by the multilingual resource texts may be reduced to a great extent, the problem of the excessively large storage space occupied by the multilingual resource texts may be effectively solved, the size of the resource file called in the text loading process may be effectively reduced, and the resource consumption during data processing may be effectively reduced. In addition, because the format of the text file is reconstructed, corresponding encryption processing may be performed on a key-value, which is reflected in a form of a feature code, so that the confidentiality of the multilingual resource text file may be effectively ensured.

### BRIEF DESCRIPTION OF THE DRAWINGS

In order to more clearly explain the technical solutions in the present application or in the related art, the following will briefly introduce the drawings that need to be used in the description of the embodiments or the related art. Obviously, the drawings in the following description are only the embodiments of the present application. For those of ordinary skill in the art, other drawings may be obtained based on these drawings without creative efforts.
Fig. 1 shows a procedure of implementing a text loading method according to some embodiments of the present disclosure;
Fig. 2 shows a schematic diagram of a partial structure of a binary text file according to some embodiments of the present disclosure;
Fig. 3 shows a procedure of implementing a text file generation method according to an embodiment of the present disclosure;
Fig. 4 shows an internal structure of a text loading apparatus according to an embodiment of the present disclosure;
Fig. 5 shows an internal structure of a text file generation apparatus according to an embodiment of the present disclosure; and
Fig. 6 shows a schematic diagram of a hardware structure of an electronic device according to an embodiment of the present disclosure.

### DETAILED DESCRIPTION OF EMBODIMENTS

In order to make the objectives, technical solutions, and advantages of the present disclosure clearer, the following further describes the present disclosure in detail with reference to specific embodiments and the drawings.

It should be noted that unless otherwise defined, the technical or scientific terms used in the embodiments of the present application shall have general meanings as understood by those of ordinary skill in the art to which the present application belongs. "First", "second", and like words used in the embodiments of the present application do not represent any order, quantity, or importance, but are merely used to distinguish between different components. "Include" or "include" or like words mean that an element or item preceding the term encompasses an element or item or its equivalent listed after the term, without excluding other elements or items. "Connect" or "connected" or like words are not limited to a physical or mechanical connection, but may include an electrical connection, whether direct or indirect. "Up", "down", "left", "right", and the like are merely used to represent a relative positional relationship, and the relative positional relationship may change accordingly when an absolute position of the described object changes.

As described above, the multilingual resource copywriting is stored and called directly in a format such as JSON or XML, but the volume occupancy of the resource file during storage and calling is too large due to the insufficient compactness of the above format. In addition, because the above format is in plain text and are not encrypted, the confidentiality of the above file cannot be effectively guaranteed.

To this end, some embodiments of the present disclosure provide a text loading method, which may effectively reduce the size of a called multilingual resource file and reduce the resources consumed for data processing in the loading process. In addition, the loaded binary text file may implement encryption processing on a key-value, thereby effectively ensuring the confidentiality of a multilingual resource text file. In an embodiment of the present disclosure, the above text loading method may be implemented by an electronic device with computing power.

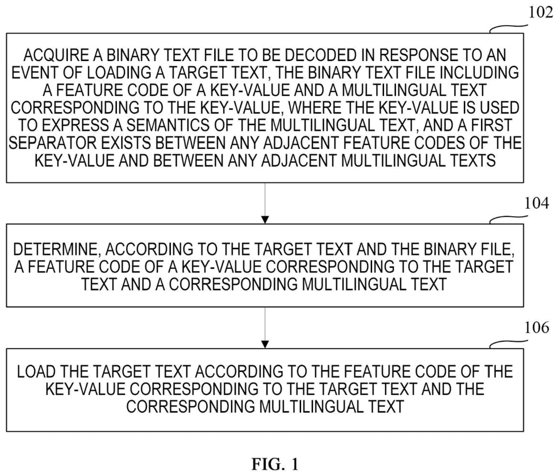

Fig. 1 shows a procedure of implementing a text loading method according to some embodiments of the present disclosure. As shown in Fig. 1, the method may include the following steps.

At step 102, a binary text file to be decoded is acquired in response to an event of loading a target text.

In an embodiment of the present disclosure, the above event of loading the target text may be that a program or a project loads a language resource for the first time, or change the language resource. For example, if the program or project is opened for the first time, a main language is loaded by default, and the event of loading the target text at this time is an event of loading a main language text. It should be noted that for different regions, those skilled in the art may also specifically set different main languages. After the user opens the program, if the language of the program at this time is not the language required by the user, or the user has a need to change the language, the event of loading the target text at this time is to change to the language corresponding to the language of the target text specified by the user. The present disclosure does not have a corresponding limitation on the language type in the above event of loading the target text.

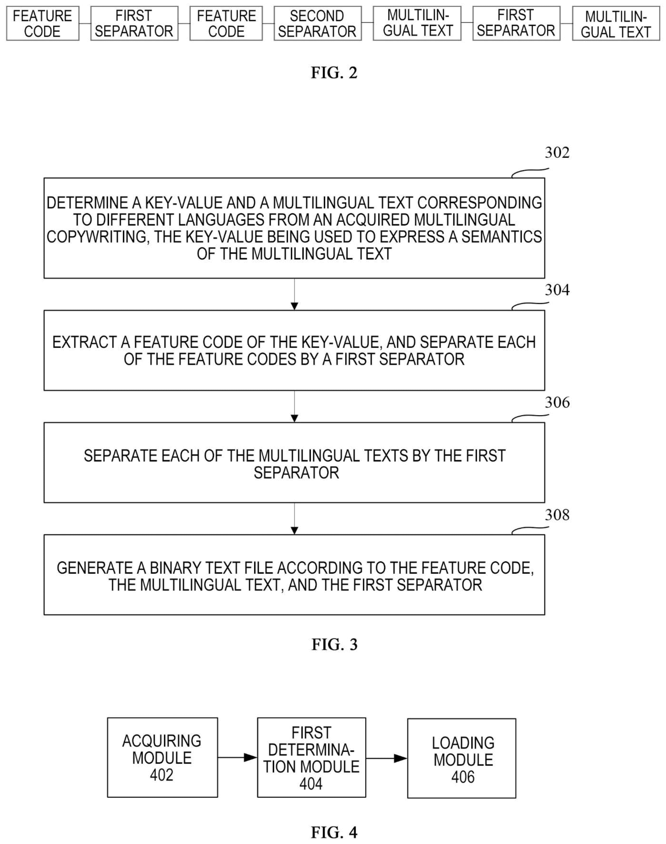

Fig. 2 is a schematic diagram showing a partial structure of a binary text file according to some embodiments of the present disclosure.

The binary text file according to the present disclosure is described below with reference to Fig. 2.

In an embodiment of the present disclosure, the binary text file includes a feature code of a key-value and a multilingual text corresponding to the key-value, where the key-value is used to express a semantics of the multilingual text, and a first separator exists between any adjacent feature codes of the key-value and between any adjacent multilingual texts.

In an embodiment of the present disclosure, the feature code of the key-value is obtained by encrypting the key-value. The key-value is extracted from a singular main language text resource in the multilingual text resource file, and is used to express the semantics of the multilingual text. For example, when the key-value is "name", the multilingual text may be "John" or "YUEHAN". After the key-value is extracted, in some embodiments of the present disclosure, the key-value is processed in hexadecimal, and then the key-value is encrypted by using a Message-Digest Algorithm 5 (MD5) algorithm, and then the encrypted key-value is separated by the first separator and arranged in sequence to obtain the key-value. Similarly, the corresponding key-value in the code also needs to go through the above processing, so that in the subsequent loading process, the key-value does not need to be decoded again, and the encrypted texts may be directly compared, which may effectively reduce the time of the loading process and improve the loading efficiency.

The above MD5 algorithm is a message digest algorithm, which belongs to a hash algorithm. Under normal circumstances, the result is a 32-bit hexadecimal text string. The main feature of the MD5 algorithm is irreversibility, the MD5 values for the same data must be the same, and the MD5 values of different data are different. The MD5 algorithm is used to encrypt the above key-value. First, the key-value may be effectively compressed, because the length of the calculated MD5 value is fixed for data of any length. Secondly, it may effectively ensure the recognizability and anti-modification of the key-value, because any change to the original data will result in a great difference in the finally obtained MD5 value. Therefore, when the key-values are compared, the situation that different key-values correspond to the same MD5 code and thus the key-value recognition is wrong will not occur. If someone maliciously tampers with the key-value, the corresponding MD5 code cannot be recognized correspondingly, so the situation of malicious tampering may be effectively avoided. In addition, the operation process of the MD5 algorithm is relatively simple, so using this algorithm to encrypt the key-value will not consume many resources. It should be noted that the algorithm for encrypting the key-value in the present disclosure is not limited to the MD5 algorithm, and it is theoretically feasible to use other encryption algorithms, as long as it is ensured that for different key-values, the encrypted results are different, and the encrypted results are not too long. This is because encrypting the key-value is not only to ensure the confidentiality of the multilingual file, but also to reduce the storage space occupied by the multilingual file. Therefore, if an encryption algorithm with an excessively long encrypted result is selected, the technical effect of reducing the occupied space cannot be achieved, but if the problem of occupied space is not considered, only the uniqueness of the key-value encryption needs to be ensured. The present disclosure does not have a corresponding limitation on the encryption algorithm used for the key-value.

In an embodiment of the present disclosure, each feature code of the key-value is separated by the first separator.

In some embodiments of the present disclosure, the first separator may be "\0", and the advantage of the first separator is that it is short. The first separator is used to separate the feature codes of the key-value, and then the feature codes of the key-value is simply arranged to form a format of "key1\0key2\0...". Compared with the format in the prior art, the format in the embodiment of the present disclosure is more concise, and the space occupied by the key-value is effectively reduced through this relatively simple arrangement. In combination with the above corresponding encryption algorithm, in the embodiment of the present disclosure, after the key-value is compressed once, only the concise separator is used for separation, and the format of the key-value is constructed, the storage space occupied by the key-value is reduced in two dimensions, and the occupancy of storage resources is saved to a great extent.

In an embodiment of the present disclosure, for each language in the multilingual text, there is a corresponding language text for each corresponding key-value, and the first separator exists between each of the language texts.

For the multilingual text, because this part records the finally presented text, this part of text cannot be encrypted in the processing process. If this part of text is encrypted, the target text cannot be normally displayed to the user if this part of text is not decrypted in the final loading process. If this part of text is decrypted, many additional workloads are added, which is unnecessary. Therefore, in the embodiment of the present disclosure, the multilingual text is not encrypted, but only adjacent multilingual texts are separated by the first separator, and all multilingual texts are arranged in sequence. Through the format constructed by the above arrangement, the spacing between texts is reduced compared with the format in the prior art, thus effectively reducing the space occupied by the multilingual text.

In an embodiment of the present disclosure, the binary text file further includes: a meta information field, configured to record a position and a length of the feature code, and record a position and a length of a different language text in the multilingual text; and a second separator, configured to separate the feature code from the multilingual text. The meta information field records information of the key-value and the multilingual text, which may specifically include the corresponding position and length. Because the multilingual text may include texts corresponding to multiple languages, the multilingual text corresponding to the target text needs to be quickly found in the loading process of the multilingual text resource. Therefore, after the position and length corresponding to the different language texts are written into the meta information field in the above step, the key-value and the multilingual text corresponding to the language corresponding to the target text may be quickly found in the subsequent loading process, which effectively reduces the loading time of the language, thereby effectively improving the experience of the user when switching languages. The feature code of the key-value and the multilingual text are separated by the second separator. In the process of storing the multilingual text, in order to effectively distinguish the feature code of the key-value from the multilingual text, a corresponding separator is provided between the two.

In an embodiment of the present disclosure, the second separator may be a "DATA" text, and using this text as the second separator may not only separate the feature code of the key-value from the multilingual text, but also play a certain identification role. For example, this text is used to identify that the subsequent fields are all multilingual texts. The above second separator field is not limited to the example given above, and those skilled in the art may set the corresponding second separator by themselves. In addition, a second separator may also be included between the meta information field and the feature code of the key-value, for example, a "keys" text is used to correspondingly separate the meta information field from the feature code of the key-value. Similarly, the above text may not only play a role in separating the meta information field from the feature code, but also play a certain identification role for the feature code, for example, the text is used to identify that the subsequent field is the feature code. Similarly, the above second separator is not limited to the "keys" text, and those skilled in the art may set the text by themselves.

In an embodiment of the present disclosure, the binary text file further includes a file header. The file header may display the actual usage of the file. In a computer, the file header is a section of data used to describe the content and format of the file. Different file formats have different file header formats. The content of the file header usually includes information such as the type, version, encoding method, and file size of the file, so as to facilitate the identification and processing of the file by the computer. However, because a new format is constructed for the multilingual text resource file in the embodiment of the present disclosure, a new file header is created for this format to describe the detailed information of the corresponding file.

At step 104, a feature code of a key-value corresponding to the target text and a corresponding multilingual text are determined according to the target text and the binary file.

In an embodiment of the present disclosure, the determining a feature code of a key-value corresponding to the target text and a corresponding multilingual text according to the target text and the binary file includes: reading the position and the length of the feature code recorded in the meta information field, and reading a position and a length of the multilingual text corresponding to a language of the target text, to obtain the feature code corresponding to the target text and the multilingual text corresponding to the target text.

It may be learned from the foregoing that the binary text file includes the meta information field, and the meta information field is configured to record the position and the length of the feature code, and the position and the length of the multilingual text. Therefore, in the determination process, the feature code and the multilingual text corresponding to the language corresponding to the target text may be acquired through the meta information field. Further, because the positions and lengths of the above feature code and the multilingual text all have corresponding records, only the corresponding position and length need to be acquired in the loading process to quickly find the corresponding feature code or the multilingual text, which effectively reduces the time of finding the feature code or the multilingual text, thereby effectively reducing the time of loading the multilingual text resource.

In an embodiment of the present disclosure, the above process of reading the corresponding feature code and the corresponding multilingual text may be performed in parallel. That is, the feature code and the corresponding multilingual text are read at the same time, so that the time required to determine the feature code of the key-value corresponding to the target text and the corresponding multilingual text may be effectively reduced, thereby effectively reducing the time of loading the corresponding multilingual resource.

At step 106, the target text is loaded according to the feature code of the key-value corresponding to the target text and the corresponding multilingual text.

After the feature code of the key-value corresponding to the target text and the corresponding multilingual text are determined in the above steps, the target text may be loaded according to the feature code and the corresponding multilingual text determined above. The loading process is a process of matching the key-value with the multilingual text, which those skilled in the art should know, so details are not described herein again.

According to the above text loading method, when texts are loaded, the generated binary text file does not use the traditional JSON or XML format to call or store the multilingual resource file, instead, a new text file generation method is constructed, and the feature code and the multilingual text are separated by the first separator and rearranged, so that the size of the called multilingual resource file may be effectively reduced in the loading process, and the resources consumed for data processing may be reduced.

In addition, an embodiment of the present disclosure further discloses a text file generation method, which may make the processed multilingual resource texts be arranged compactly, and may reduce the storage space occupied by the multilingual resource texts to a great extent. In addition, because the storage format of the multilingual resource texts is reconstructed, corresponding encryption processing may be performed on a key-value, which is reflected in a form of a feature code, so that the confidentiality of a multilingual resource text file may be effectively ensured.

Fig. 3 shows a procedure of implementing a text file generation method according to an embodiment of the present disclosure. As shown in Fig. 3, the method may include the following steps.

At step 302, a key-value and a multilingual text corresponding to different languages are determined from an acquired multilingual copywriting, the key-value being used to express a semantics of the multilingual text.

In an embodiment of the present disclosure, determining the key-value from the acquired multilingual copywriting includes: determining, from the multilingual copywriting, a target language text corresponding to a target language; and determining the key-value based on the target language text.

In an embodiment of the present disclosure, the multilingual text file to be processed includes text files corresponding to different types of languages, and one language needs to be determined therefrom as the target language, because only the key-value of the target language needs to be extracted in the subsequent process.

In an embodiment of the present disclosure, the multilingual copywriting includes first language copywriting, where the first language copywriting is used to represent a word in a singular form; and determining the key-value and the multilingual text corresponding to different languages from the acquired multilingual copywriting includes: determining the key-value and the multilingual text corresponding to the different languages from the first language copywriting.

In an embodiment of the present disclosure, because the number of words in a plural form is small, and the process of extracting the key-value for the word in the plural form is relatively complex, if the extraction is performed on all kinds of text files, many unnecessary workloads will be added in the subsequent processing process. Therefore, in the embodiment of the present disclosure, the extraction of the key-value and the language text is only performed on the word in the singular form, and for the word in the plural form, because the number of words in the plural form is small, not processing the word in the plural form will not occupy too much storage space. Therefore, the words in the plural form may be packaged separately, and may be directly called and loaded in the subsequent loading process.

Therefore, in an embodiment of the present disclosure, the key-value may be extracted only from the word in the singular form of the target language, and when the multilingual text is extracted, the extraction needs to be performed on the words in the singular form of all languages.

In an embodiment of the present disclosure, the language text corresponding to each language is in a one-to-one correspondence with the key-value.

At step 304, a feature code of the key-value is extracted, and each of the feature codes is separated by a first separator.

In an embodiment of the present disclosure, extracting the feature code of the key-value includes: encrypting the key-value by using a preset encryption algorithm to obtain the feature code of the key-value. The encryption algorithm mentioned here may be consistent with the encryption algorithm in the above text loading method, and the arrangement relationship between the feature code of the key-value and the first separator is also described in detail in the above text loading method, so details are not described herein again. The above feature code may be an encrypted result obtained after encryption.

At step 306, each of the multilingual texts is separated by the first separator.

In an embodiment of the present disclosure, for the corresponding description of the first separator and the corresponding description of the separation of the language texts corresponding to different languages by the first separator, reference may be made to the corresponding description in the above text loading method, and details are not described herein again. For the above arrangement in sequence according to the language type, when arranging the language texts corresponding to different languages, the arrangement is performed according to the language type, and the positions of the language texts of the same language type are adjacent or close to each other, which is convenient for quick finding when the texts are loaded.

At step 308, a binary text file is generated according to the feature code, the multilingual text, and the first separator.

In an embodiment of the present disclosure, the binary text file includes a meta information field, and the method further includes: writing, into the meta information field, a corresponding position after the feature code and the multilingual text are arranged in a preset manner; and writing, into the meta information field, a length of the feature code and a length of the multilingual text. Similarly, for the description of the meta information field, reference may be made to the corresponding description in the above text loading method part, and details are not described herein again. Corresponding to the above text loading method, in the loading process, the corresponding key-value and the multilingual text are acquired by reading the position and the length after the feature code and the multilingual text in the meta information field are arranged in the preset manner, so as to implement the loading of the multilingual text resource. Correspondingly, in the process of generating the text file, the above corresponding position and length need to be written into the meta information field first for reading in the subsequent loading process.

In an embodiment of the present disclosure, the binary text file further includes a second separator, and the feature code and the multilingual text are separated by the second separator. The generating the binary text file according to the feature code, the multilingual text, and the first separator includes: arranging the meta information field, the feature code, the first separator, the second separator, and the multilingual text in a preset manner, and performing a binary operation to obtain the binary text file. The above binary text may include a file header. For the description of the file header, reference may also be made to the corresponding description of the above text loading method, and details are not described herein again. The above arrangement in the preset manner may be performed in sequence according to the order of the file header, the meta information field, the second separator, the feature code, the second separator, and the multilingual text. Certainly, the above arrangement is only illustrative, and does not mean that the present disclosure is limited to the above arrangement. After all the fields are arranged in the preset manner, the binary operation is performed on all the arranged fields to finally obtain the binary text file.

The above text file generation method reconstructs the overall format, and greatly shortens the space between the feature code of the key-value and the multilingual text to form a new format. This may effectively make the processed multilingual resource texts be arranged compactly, may reduce the storage space occupied by the multilingual resource texts to a great extent, and may effectively solve the problem of the excessively large storage space occupied by the multilingual resource texts. In addition, because the format of the text file is reconstructed, corresponding encryption processing may be performed on the key-value, which is reflected in the form of the feature code, so that the confidentiality of the multilingual resource text file may be effectively ensured.

It should be noted that the method in the embodiment of the present application may be executed by a single device, such as a computer or a server. The method in this embodiment may also be applied to a distributed scenario, and is completed by a plurality of devices in cooperation with each other. In the case of this distributed scenario, one device in the plurality of devices may only execute one or more steps in the method in the embodiment of the present application, and the plurality of devices will interact with each other to complete the method."]

It should be noted that some embodiments of the present application have been described above. Other embodiments are within the scope of the appended claims. In some cases, the actions or steps recorded in the claims may be performed in an order different from that in the above embodiments and still achieve the desired results. In addition, the process depicted in the drawings does not necessarily require the specific order shown or the continuous order to achieve the desired results. In some implementations, multitasking and parallel processing are also possible or may be advantageous.

Corresponding to the above text loading method, an embodiment of the present disclosure further discloses a text loading apparatus. Fig. 4 shows an internal structure of a text loading apparatus according to an embodiment of the present disclosure. As shown in Fig. 4, the apparatus may include:
an acquiring module 402, configured to acquire a binary text file to be decoded in response to an event of loading a target text, the binary text file including a feature code of a key-value and a multilingual text corresponding to the key-value, where the key-value is used to express a semantics of the multilingual text, and a first separator exists between any adjacent feature codes of the key-value and between any adjacent multilingual texts;
a first determination module 404, configured to determine, according to the target text and the binary file, a feature code of a key-value corresponding to the target text and a corresponding multilingual text; and
a loading module 406, configured to load the target text according to the feature code of the key-value corresponding to the target text and the corresponding multilingual text.

In some embodiments of the present disclosure, the binary text file further includes:
a meta information field, configured to record a position and a length of the feature code, and record a position and a length of a different language text in the multilingual text; and
a second separator, configured to separate the feature code from the multilingual text.

In some embodiments of the present disclosure, the first determination module 404 may include:
a reading unit, configured to read the position and the length of the feature code recorded in the meta information field, and read a position and a length of the multilingual text corresponding to a language of the target text, to obtain the feature code corresponding to the target text and the multilingual text corresponding to the target text.

In some embodiments of the present disclosure, the reading unit may include:
reading in parallel the position and the length of the feature code recorded in the meta information field, and reading the position and the length of the multilingual text corresponding to the language of the target text, to obtain the feature code corresponding to the target text and the multilingual text corresponding to the target text.

In some embodiments of the present disclosure, the fixed text string includes a second separator, and the key-value and the multilingual text are separated by the second separator.

In some embodiments of the present disclosure, the feature code of the key-value is obtained by encrypting the key-value.

For the specific implementation of each module above, reference may be made to the above method and the drawings, and details are not repeated herein. For the convenience of description, when the above apparatus is described, the functions are divided into various modules for description. Certainly, when the present disclosure is implemented, the functions of the modules may be implemented in one or more pieces of software and/or hardware.

The apparatus in the above embodiment is configured to implement the corresponding text loading method in any one of the above embodiments, and has the beneficial effects of the corresponding method embodiment, which are not described herein again.

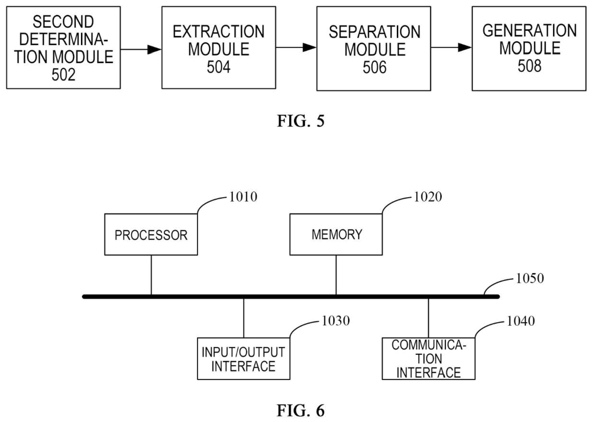

Corresponding to the above text file generation method, an embodiment of the present disclosure further discloses a text file generation apparatus. Fig. 5 shows an internal structure of a text file generation apparatus according to an embodiment of the present disclosure. As shown in Fig. 5, the apparatus may include:
a second determination module 502, configured to determine a key-value and a multilingual text corresponding to different languages from an acquired multilingual copywriting, the key-value being used to express a semantics of the multilingual text;
an extraction module 504, configured to extract a feature code of the key-value, and separate each of the feature codes by a first separator;
a separation module 506, configured to separate each of the multilingual texts by the first separator; and
a generation module 508, configured to generate a binary text file according to the feature code, the multilingual text, and the first separator.

In some embodiments of the present disclosure, the extraction module 504 includes:
a first determination unit, configured to determine, from the multilingual copywriting, a target language text corresponding to a target language; and
a second determination unit, configured to determine the key-value based on the target language text.

In some embodiments of the present disclosure, the multilingual copywriting includes first language copywriting, where the first language copywriting is used to represent a word in a singular form; and
the second determination module 502 may include:
a third determination unit, configured to determine the key-value and the multilingual text corresponding to the different languages from the first language copywriting.

In some embodiments of the present disclosure, the binary text file includes a meta information field, and
the apparatus further includes:
a position writing module, configured to write, into the meta information field, a corresponding position after the feature code and the multilingual text are arranged in a preset manner; and
a length writing module, configured to write, into the meta information field, a length of the feature code and a length of the multilingual text.

In some embodiments of the present disclosure, the binary text file further includes a second separator, and the feature code and the multilingual text are separated by the second separator.

In some embodiments of the present disclosure, the generation module 508 includes:
a binary unit, configured to arrange the meta information field, the feature code, the first separator, the second separator, and the multilingual text in the preset manner, and perform a binary operation to obtain the binary text file.

For the specific implementation of each module above, reference may be made to the above method and the drawings, and details are not repeated herein. For the convenience of description, when the above apparatus is described, the functions are divided into various modules for description. Certainly, when the present disclosure is implemented, the functions of the modules may be implemented in one or more pieces of software and/or hardware.

The apparatus in the above embodiment is configured to implement the corresponding text file generation method in any one of the above embodiments, and has the beneficial effects of the corresponding method embodiment, which are not described herein again.

Based on the same inventive concept, corresponding to the method in any one of the above embodiments, the present application further provides an electronic device, including a memory, a processor, and a computer program stored on the memory and executable on the processor, where the processor, when executing the program, implements the text loading method and the text file generation method as described in any one of the above embodiments.

Fig. 6 shows a schematic diagram of a hardware structure of an electronic device according to an embodiment of the present disclosure. The device may include a processor 1010, a memory 1020, an input/output interface 1030, a communication interface 1040, and a bus 1050. The processor 1010, the memory 1020, the input/output interface 1030, and the communication interface 1040 are connected to each other inside the device through the bus 1050.

The processor 1010 may be implemented using a general-purpose central processing unit (CPU), a microprocessor, an application specific integrated circuit (ASIC), or one or more integrated circuits, etc., for executing relevant programs, to implement the technical solutions provided in the embodiments of the present specification.

The memory 1020 may be implemented using a read-only memory (ROM), a random access memory (RAM), a static storage device, a dynamic storage device, etc. The memory 1020 may store an operating system and other applications, and when the technical solutions provided in the embodiments of the present specification are implemented through software or firmware, the relevant program code is stored in the memory 1020 and called by the processor 1010 for execution.

The input/output interface 1030 is used for connecting to an input/output module, to implement information input and output. The input/output module may be configured as a component in the device (not shown in the figure), or may be external to the device to provide a corresponding function. The input device may include a keyboard, a mouse, a touch screen, a microphone, various sensors, etc., and the output device may include a display, a speaker, a vibrator, an indicator light, etc.

The communication interface 1040 is used for connecting to a communication module (not shown in the figure), to implement communication interaction between the device and other devices. The communication module may implement communication in a wired manner (e.g., USB, network cable, etc.), or may implement communication in a wireless manner (e.g., mobile network, WIFI, Bluetooth, etc.).

The bus 1050 includes a path for transferring information between components of the device (e.g., the processor 1010, the memory 1020, the input/output interface 1030, and the communication interface 1040).

It should be noted that although only the processor 1010, the memory 1020, the input/output interface 1030, the communication interface 1040, and the bus 1050 are shown in the above device, during a specific implementation, the device may further include other components necessary for proper operation. In addition, it may be understood by those skilled in the art that the above device may include only the components necessary for implementing the solutions provided in the embodiments of the present specification, and not necessarily include all the components shown in the figure."]

The electronic device in the above embodiment is configured to implement the corresponding text loading method and the corresponding text file generation method in any one of the above embodiments, and has the beneficial effects of the corresponding method embodiment, which are not described herein again.

Based on the same inventive concept, corresponding to the method in any one of the above embodiments, the present application further provides a non-transitory computer-readable storage medium, storing computer instructions, where the computer instructions are used to cause a computer to execute the text loading method and the text file generation method as described in any one of the above embodiments.

The computer-readable medium in this embodiment includes permanent and non-permanent, removable and non-removable media, and information storage may be implemented by using any method or technology. Information may be computer-readable instructions, data structures, modules of a program, or other data. Examples of the computer storage medium include, but are not limited to, a phase-change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette tape, tape or disk storage or another magnetic storage device, or any other non-transmission medium that may be used to store information that may be accessed by a computing device.

The computer instructions stored on the storage medium in the above embodiment are used to cause the computer to execute the text loading method and the text file generation method as described in any one of the above embodiments, and have the beneficial effects of the corresponding method embodiment, which are not described herein again.

Based on the same inventive concept, corresponding to the text loading method and the text file generation method as described in any one of the above embodiments, the present disclosure further provides a computer program product, including computer program instructions. In some embodiments, the computer program instructions may be executed by one or more processors of a computer to cause the computer and/or the processor to execute the text loading method and the text file generation method. Corresponding to the execution body corresponding to each step in each embodiment of the text loading method and the text file generation method, the processor that executes the corresponding step may belong to the corresponding execution body.

The computer program product in the above embodiment is used to cause the computer and/or the processor to execute the text loading method and the text file generation method as described in any one of the above embodiments, and has the beneficial effects of the corresponding method embodiment, which are not described herein again.

It should be understood by those of ordinary skill in the art that the discussion of any one of the above embodiments is merely illustrative, and is not intended to imply that the scope of the present application (including the claims) is limited to these examples; and with the concept of the present application, the technical features in the above embodiments or different embodiments may also be combined, steps may be implemented in any order, many other changes may be made to different aspects of the embodiments of the present application as described above and are not provided in detail for simplicity.

In addition, to simplify description and discussion and avoid obscuring an understanding of the embodiments of the present application, well-known power/ground connections to an integrated circuit (IC) chip and other components may or may not be shown in the drawings that are provided. Furthermore, the apparatus may be shown in the form of a block diagram to avoid obscuring an understanding of the embodiments of the present application, and the following fact is also taken into account: details regarding the implementation of the apparatus in the form of block diagram are highly dependent upon a platform on which the embodiments of the present application are to be implemented (i.e., such details should be fully understood by those skilled in the art). Where the specific details (e.g., circuitry) are set forth to describe the illustrative embodiments of the present application, it will be apparent to those skilled in the art that the embodiments of the present application may be implemented without these specific details or with variations to these specific details. These descriptions should therefore be considered illustrative rather than limiting.

Although the present application has been described with reference to the specific embodiments of the present application, many substitutions, modifications, and variations of these embodiments will be apparent to those of ordinary skill in the art from the foregoing description. For example, the discussed embodiments may be used for other memory architectures such as a dynamic RAM (DRAM).

The embodiments of the present application are intended to cover all such substitutions, modifications, and variations that fall within the broad scope of the appended claims. Therefore, any omissions, modifications, equivalent substitutions, improvements etc. made within the spirit and principle of the embodiments of the present application are intended to be included within the scope of protection of the present application.

## Claims

1. A text loading method, comprising:
acquiring a binary text file to be decoded in response to an event of loading a target text, the binary text file comprising a feature code of a key-value and a multilingual text corresponding to the key-value, wherein the key-value is used to express a semantics of the multilingual text, and a first separator exists between any adjacent feature codes of the key-value and between any adjacent multilingual texts;
determining, according to the target text and the binary file, a feature code of a key-value corresponding to the target text and a corresponding multilingual text; and
loading the target text according to the feature code of the key-value corresponding to the target text and the corresponding multilingual text.

2. The method of claim 1, wherein the binary text file further comprises:
a meta information field, configured to record a position and a length of the feature code, and record a position and a length of a different language text in the multilingual text; and
a second separator, configured to separate the feature code from the multilingual text.

3. The method of claim 2, wherein the determining a feature code of a key-value corresponding to the target text and a corresponding multilingual text according to the target text and the binary file comprises:
reading the position and the length of the feature code recorded in the meta information field, and reading a position and a length of the multilingual text corresponding to a language of the target text, to obtain the feature code corresponding to the target text and the multilingual text corresponding to the target text.

4. The method of claim 3, wherein the reading the position and the length of the feature code recorded in the meta information field, and reading the position and the length of the multilingual text corresponding to the language of the target text, to obtain the feature code corresponding to the target text and the multilingual text corresponding to the target text comprises:
reading in parallel the position and the length of the feature code recorded in the meta information field, and reading the position and the length of the multilingual text corresponding to the language of the target text, to obtain the feature code corresponding to the target text and the multilingual text corresponding to the target text.

5. The method of claim 1, wherein the feature code of the key-value is obtained by encrypting the key-value.

6. A text file generation method, comprising:
determining a key-value and a multilingual text corresponding to different languages from an acquired multilingual copywriting, the key-value being used to express a semantics of the multilingual text;
extracting a feature code of the key-value, and separating each of the feature codes by a first separator;
separating each of the multilingual texts by the first separator; and
generating a binary text file according to the feature code, the multilingual text, and the first separator.

7. The method of claim 6, wherein the determining the key-value from the acquired multilingual copywriting comprises:
determining, from the multilingual copywriting, a target language text corresponding to a target language; and
determining the key-value based on the target language text.

8. The method of claim 6 or 7, wherein the multilingual copywriting comprises first language copywriting, wherein the first language copywriting is used to represent a word in a singular form; and
the determining a key-value and a multilingual text corresponding to different languages from an acquired multilingual copywriting comprises:
determining the key-value and the multilingual text corresponding to the different languages from the first language copywriting.

9. The method of claim 6, wherein the binary text file comprises a meta information field, and
the method further comprises:
writing, into the meta information field, a corresponding position after the feature code and the multilingual text are arranged in a preset manner; and
writing, into the meta information field, a length of the feature code and a length of the multilingual text.

10. The method of claim 9, wherein the binary text file further comprises a second separator, and the feature code and the multilingual text are separated by the second separator.

11. The method of claim 10, wherein the generating a binary text file according to the feature code, the multilingual text, and the first separator comprises:
arranging the meta information field, the feature code, the first separator, the second separator, and the multilingual text in the preset manner and performing a binary operation, to obtain the binary text file.

12. The method of claim 6, wherein the extracting the feature code of the key-value comprises: encrypting the key-value by using a preset encryption algorithm to obtain the feature code of the key-value.

13. A text loading apparatus, comprising:
an acquiring module, configured to acquire a binary text file to be decoded in response to an event of loading a target text, the binary text file comprising a feature code of a key-value and a multilingual text corresponding to the key-value, wherein the key-value is used to express a semantics of the multilingual text, and a first separator exists between any adjacent feature codes of the key-value and between any adjacent multilingual texts;
a first determination module, configured to determine, according to the target text and the binary file, a feature code of a key-value corresponding to the target text and a corresponding multilingual text; and
a loading module, configured to load the target text according to the feature code of the key-value corresponding to the target text and the corresponding multilingual text.

14. The apparatus of claim 13, wherein the binary text file further comprises:
a meta information field, configured to record a position and a length of the feature code, and record a position and a length of a different language text in the multilingual text; and
a second separator, configured to separate the feature code from the multilingual text.

15. The apparatus of claim 14, wherein the first determination module comprises:
a reading unit, configured to read the position and the length of the feature code recorded in the meta information field, and read a position and a length of the multilingual text corresponding to a language of the target text, to obtain the feature code corresponding to the target text and the multilingual text corresponding to the target text.

16. A text file generation apparatus, comprising:
a second determination module, configured to determine a key-value and a multilingual text corresponding to different languages from an acquired multilingual copywriting, the key-value being used to express a semantics of the multilingual text;
an extraction module, configured to extract a feature code of the key-value, and separate each of the feature codes by a first separator;
a separation module, configured to separate each of the multilingual texts by the first separator; and
a generation module, configured to generate a binary text file according to the feature code, the multilingual text, and the first separator.

17. The apparatus of claim 16, wherein the extraction module comprises:
a first determination unit, configured to determine, from the multilingual copywriting, a target language text corresponding to a target language; and
a second determination unit, configured to determine the key-value based on the target language text.

18. The apparatus of claim 16, wherein the multilingual copywriting comprises first language copywriting, wherein the first language copywriting is used to represent a word in a singular form; and
the second determination module comprises:
a third determination unit, configured to determine the key-value and the multilingual text corresponding to the different languages from the first language copywriting.

19. The apparatus of claim 16, wherein the binary text file comprises a meta information field, and
the apparatus further comprises:
a position writing module, configured to write, into the meta information field, a corresponding position after the feature code and the multilingual text are arranged in a preset manner; and
a length writing module, configured to write, into the meta information field, a length of the feature code and a length of the multilingual text.

20. The apparatus of claim 16, wherein the binary text file further comprises a second separator, and the feature code and the multilingual text are separated by the second separator.

21. The apparatus of claim 20, wherein the generation module comprises:
a binary unit, configured to arrange the meta information field, the feature code, the first separator, the second separator, and the multilingual text in the preset manner, and perform a binary operation to obtain the binary text file.

22. An electronic device, comprising a memory, a processor, and a computer program stored on the memory and executable on the processor, wherein the processor, when executing the program, implements the method of any one of claims 1 to 12.

23. A non-transitory computer-readable storage medium, storing computer instructions, wherein the computer instructions are used to cause a computer to execute the method of any one of claims 1 to 12.

24. A computer program product, comprising computer program instructions, wherein the computer program instructions, when running on a computer, cause the computer to execute the method of any one of claims 1 to 12.
